Europäisches Patentamt

European Patent Office

Office européen des brevets

(19)

(11) Publication number: **0 039 582**
**A1**

(12) **EUROPEAN PATENT APPLICATION**

(21) Application number: **81301907.2**

(22) Date of filing: **30.04.81**

(51) Int. Cl.³: **G 01 B 3/00,** G 01 B 3/56

(30) Priority: **30.04.80 ZA 802608**

(43) Date of publication of application: **11.11.81**
**Bulletin 81/45**

(84) Designated Contracting States: **AT BE CH DE FR GB IT LI LU NL SE**

(71) Applicant: **LAMINOR TECHNICAL SERVICES GmbH, Baarerstrasse 94, Zug (CH)**

(72) Inventor: **Santilhano, Philip Dias, 124 General Hertzog Road, Three Rivers Vereeniging Transvaal 1930 (ZA)**

(74) Representative: **Ritter, Stephen David, Mathys & Squire 10 Fleet Street, London EC4Y 1AY (GB)**

(54) **Welding gauge.**

(57)    A welding gauge comprises a plate (2) and a rule (3) attached to and movable relative to the plate. Guide means (4), (5) restrain the rule to undergo rectilinear sliding movement relative to the plate and pivot means, e.g. guide means 4, enables the rule to pivot. Scales for rectilinear and angular measurement are provided.

ACTORUM AG

## WELDING GAUGE

This invention relates to welding gauges.

A welding gauge is a gauge used for taking measurements of welds, of parts being welded and of items used in welding such as welding rods. Such measurements are important for two reasons. Firstly, when a specification in respect of a weld is given, the specification must be adhered to in order that the weld performs its design function. Secondly the weld must not be made larger than specified, for by doing so more welding material than is necessary will be used, representing a waste in costs.

Welding gauges proposed hitherto have suffered from several disadvantages, for example they have been capable of measuring only a relatively small number of the various dimensional parameters of welds and parts being welded. Also prior welding gauges have been of complex construction, often including many moving parts of intricate shape.

It is an object of the invention to provide a welding gauge of relatively simple construction and having few moving parts.

A welding gauge according to the invention comprises a plate, a rule attached to and movable relative to the plate, guide means for restraining the rule to undergo rectilinear sliding movement            relative to the plate, a scale for measuring rectilinear displacement of the rule relative to the plate, a pivot for enabling angular displacement of the rule in a plane parallel to the plate and a scale on the plate for measuring angular displacement of the rule relative to the plate.

In a particularly preferred form of construction plural guide means are provided for restraining the rule to undergo rectilinear sliding movement relative to the plate and at least one of said guide means may be disengaged to allow the rule to pivot. In this form of construction another of said guide means may be arranged so that when the first guide means is disengaged, the other guide means acts as the pivot. Thus, for example, further according to the invention the guide means may comprise a pair of guide pins mounted on the plate and receivable in a slot in the length of the rule. One of the guide pins may serve as the pivot for angular displacement of the rule and means may be provided for mutually disengaging the rule and the other of the guide pins.

Thus, for example, the rule may be adapted to be disengaged from the other guide pin by lifting of the rule above the height of the other guide pin and rotating the rule about the pivot. Alternatively said other guide pin may be adapted to be retracted to a position out of engagement with the rule enabling the rule to pivot about the other guide pin. As a further but less preferred alternative the guide pins may be mounted on the rule and the slot may be formed on the plate.

Advantageously means are provided to limit the extent of the rectilinear movement of the rule relative to the plate whereby when the rule is moved to the limit of its movement and pivoted about said pivot the degree of angular displacement of the rule relative to the plate bears a predetermined relationship to the distance between a datum point on the rule and a line defined on or by the plate. Preferably at least one of the plate and the rule is marked with a scale enabling a direct reading of said distance when the rule is moved to the limit of its rectilinear movement and pivoted to enable the required distance to be measured.

Still further according to the invention the plate is rectangular, each corner of the plate being chamfered to a different predetermined depth, said depth being marked on the plate at each corner thereof.

Embodiments of welding gauge according to the invention will be described below with reference to the accompanying drawings in which:

Figure 1 is a plan view of a first embodiment of welding gauge according to the invention;

Figure 2 is a cross-sectional end elevation of the gauge of Figure 1 taken on line II - II in Figure 1;

Figures 3 to 6 show the gauge of Figure 1 in different measuring positions.

Figure 7 is a partial plan view a further embodiment of welding gauge and;

- 3 -

Figure 8 is a cross sectional end elevation of modified versions of the gauges of Figures 1 to 5 and of Figure 6 taken on line II-II of Figures 1 or 7

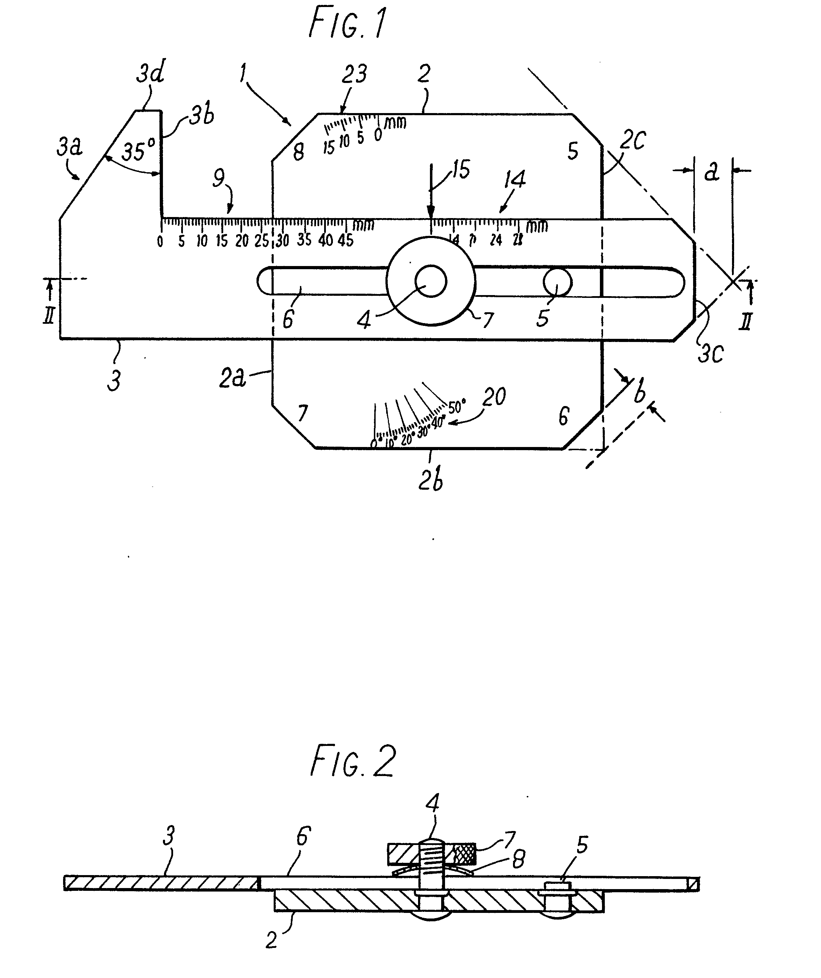

Referring to Figures 1 to 6 welding gauge 1 shown comprises a plate 2 and a rule 3.

Guide means are provided for rectilinear sliding movement of the rule 3 parallel to the plate 2. In this embodiment of the invention the guide means comprise a pair of guide pins 4, 5 mounted on the plate 2 and receivable in a slot 6 in the length of the rule 3.

When the rule 3 is located in position on the plate 2 as shown in Figures 1 and 2, the guide pin 4 extends beyond the height of the rule 3 whilst the guide pin 5 terminates short thereof.

The free end of the guide pin 4 is threaded to receive a knurled lock-nut 7 which together with a domed washer 8 is adapted to lock the rule 3 relative to the plate 2 if it is required to do so.

The rule 3 may be disengaged from the guide pin 5 by loosening the lock nut 7 to a sufficient extent, lifting the rule 3 above the height of the guide pin 5 and rotating the rule about the guide pin 4. When the rule 3 is thus disengaged from the guide pin 5, the guide pin 4 serves as a pivot for angular displacement of the rule 3 in a plane parallel to the plate 2.

The rule 3 has a portion 3a at one end thereof having an edge 3b extending at right angles thereto. A recitilinear scale 9 in millimetres is provided on the rule 3 commencing from the edge 3b. The scale 9 affords a means of measuring sizes by utilizing the edge 3b of the rule and the adjacent edge 2a of the plate 2.

The four corners of the plate 2 are chamfered to depths of 5, 6, 7 and 8 millimetres respectively and the appropriate depth is marked on each corner. Thus, for example, the distance "b" in Figure 1 is 6 millimetres.

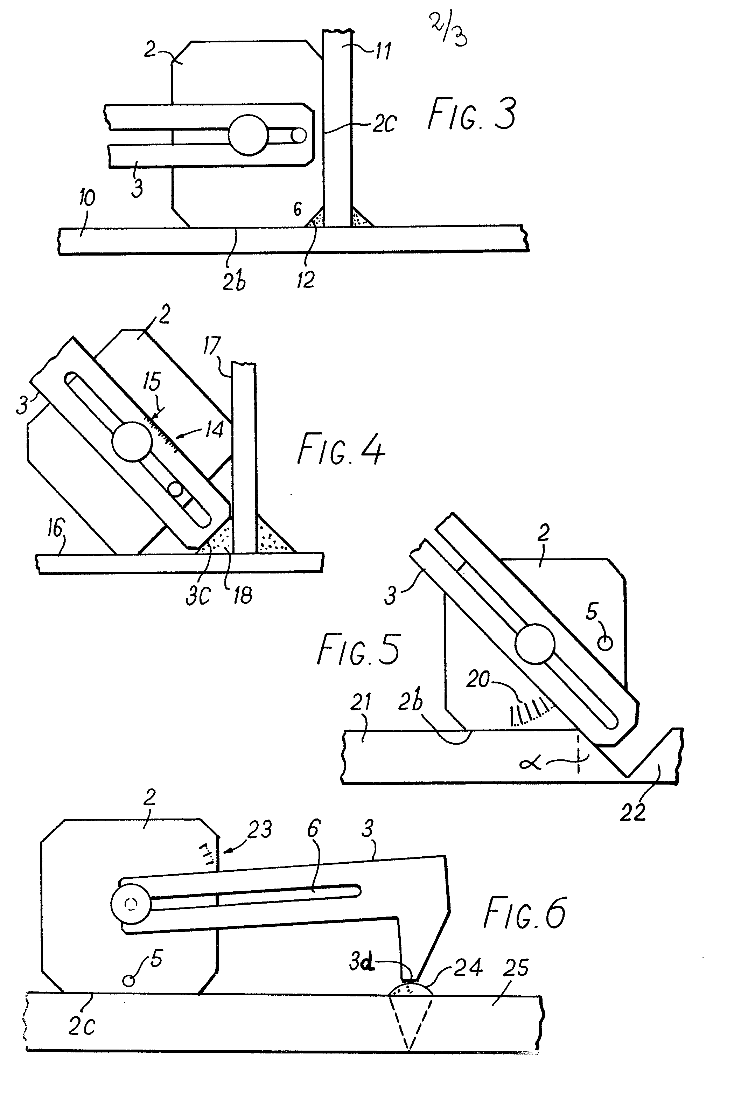

The chamfered corners of the plate 2 afford a means of measuring fillet weld sizes of 5, 6, 7 and 8 millimetres in members welded together at right angles. As shown in Figure 3 the plate 2 may be placed on two members 10, 11 and if the two edges 2b and 2c and the chamfered corner between these edges are flush with the members 10, 11 and the fillet weld 12 respectively, then the depth of the fillet weld is equal to the depth of the chamfered corner marked thereon.

For fillet welds deeper than 8 millimetres the rectilinear scale 14 on the rule 3 is used. The scale 14 is read against a marker 15 on the plate 2 and is marked from 9 millimetres to 29 millimetres. The location of the scale 12 is such that the distance "a" in Figure 1 is 9 millimetres. In use the two chamfered corners of the plate 2 are placed on the members 16, 17 (which are at right angles to one another) as shown in Figure 4 and the end 3c of the rule 3 is brought to abut the fillet weld 18. The depth of the latter is then read on the scale 14.

An angular scale 20 from $0^{\circ}$ to $50^{\circ}$ is provided on the plate 2, the reading $0^{\circ}$ being parallel to the edges 2a and 2c of the plate 2. The scale 20 affords a means of measuring an angle of preparation for a weld, for example the angle $\alpha$ of plates 21, 22 shown in Figure 5 which are to be welded together. As shown in Figure 5, the edge 2B of the plate 2 may be placed on the plate 21 and when the rule 3 is aligned on the edge of the plate 21, the angle $\alpha$ can be read on the scale 20.

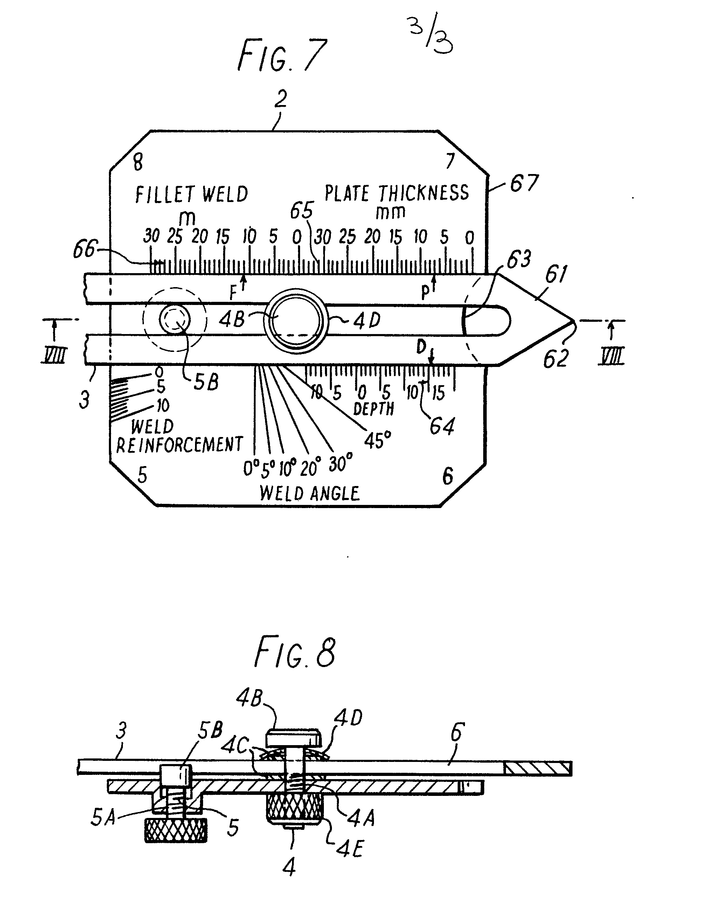

A curved scale 23 reading from 0 to 15 is provided on the plate 2. Although the scale 23 marked in millimetres, the actual interstices of the scale will not be millimetres, as will presently become clear. The scale 23 is used for measuring height generally, for example the weld reinforcement 24 shown in Figure 6. As shown, the rule 3 is disengaged from the guide pin 5 and the edge 2c placed on the workpiece 25. The rule 3 is displaced towards the edge 2a as far as the slot 6 will permit and with the tip 3d of the rule on the weld reinforcement 24, its height is read on the scale 23.

When measurements are taken on the scale 23 the rule 3 must always be in the displaced position described above. It will be understood than an actual interstice of the scale 23 will be somewhat less then than a millimetre depending on the length of the rule 3.

The embodiment of welding gauge illustrated in Figure 7 is, apart from certain features referred to below, constructed and operates in a similar manner to the gauge illustrated in Figures 1 to 6 and like parts bear the same reference numerals as were used in those Figures.

In this embodiment the end 61 of the rule 3 tapers to a point 62, the angle of taper being $60^{\circ}$ and a segment 63 is cut out of plate 3. In contrast to the gauges of Figures 1 to 6 the scales 64, 65 and 66 for taking linear measurements utilising the rectilinear sliding movement of the rule 3 relative to plate 2 are engraved on the plate rather than on the rule. Correspondingly datum points F, P and D are engraved on the rule.

This embodiment may be used as a depth gauge which will measure "cut-outs" in welds as well as pitting in for example rusty metal plates. To this end, the edge 67 of the gauge plate is placed against the work piece the degree of pitting of which is to be assessed. The rule 3 may then be slid towards the workpiece until point enters a pit. The depth of the pit may then be measured on scale 64.

Similarly weld reinforcement for small welds may be measured on the same scale by placing edge 67 over the workpiece so that the raised portion of the weld lies within cut-out 63. The height of the weld reinforcement may then be read off scale 64.

It will be appreciated that the invention provides welding gauges of relatively simple construction having few moving parts and which enables a multiplicity of measurements to be made of and relating to welds.

Other embodiments of the invention may be made differing in matters of detail from the embodiments described above and without departing from the scope of the invention described in the consistory clauses. For example, the scale 14 may commence from 0 millimetres instead of 9 millimetres as described above. In such a case, the end 3c of the rule 3 will be pointed and the point may conveniently form an angle of say $60^{\circ}$ which may

also be used as a measuring device. Also, the scales 20, 23 may be located at different positions on the plate 2 from those described above.

Furthermore, the guide pin 5 may be screw threaded and provided with a suitable head to enable it to be rotated so that the free end of the guide pin projecting into the slot 6 may be retracted, thereby obviating any interference between the guide pin 5 and the rule 3 when the latter is rotated about the guide pin 4.

Thus referring to Figure 8, guide pin 5 is screw-threaded and is mounted in a correspondingly screw-threaded bore 5A in the plate with the free end 5B of the pin extending into slot 6. The free end of pin 5 may be retracted from slot 6 by rotating the pin enabling the rule to pivot about pin 4. The free end 5B of pin 5 is enlarged and cannot be screwed into bore 5A, thus preventing the pin from being removed completely.

The arrangement of pin 4 differs from that used in the embodiments of Figures 1 to 6 in several respects. Particularly pin 4 is screw-threaded and is engaged with a correspondingly screw-threaded bore 4A in the plate and the rule is clamped between a head 4B of the pin and the plate. A pair of fibre washers 4C are provided on each side of the rule and a domed steel washer 4D is placed between one washer and the head 4B of pin 4. A lock nut 4E is screwed onto the protruding end of the pin.

The thickness of plate 2 is 3mm, enabling the plate to be used as a "feeler" gauge for measuring gaps in, e.g. pipes or tubes.

## CLAIMS

1.     A welding gauge comprising a plate, a rule attached to and movable relative to the plate, guide means for restraining the rule to undergo rectilinear sliding movement relative to the plate, a scale for measuring rectilinear sliding movement of the rule relative     to the plate, a pivot for enabling angular displacement of the rule in a plane parallel to the plate, and a scale on the plate for measuring angular displacement of the rule relative to the plate.

2.     A welding gauge according to Claim 1 wherein plural guide means are provided for restraining the rule to undergo rectilinear sliding movement relative to the plate and at least one of said guide means and the plate may be mutually disengaged to allow the rule to pivot.

3.     A welding gauge as claimed in Claim 2 provided with at least two guide means arranged so that when a first of said guide means and the plate are mutually disengaged another of said guide means acts as the pivot.

4.     A welding gauge as claimed in Claim 2 or Claim 3 wherein the guide means comprise pins mounted on the plate and receivable in a slot in the length of the rule.

5.     A welding guage as claimed in any of Claims 2 to 4 wherein one of said guide means comprises a retractable pin mounted on the plate.

6.     A gauge as claimed in Claim 5 wherein means are provided for preventing the separation of said retractable pin from the plate.

7.     A gauge as claimed in Claim 6 wherein the retractable pin is screw-threaded and is accommodated within a correspondingly screw-threaded bore in the plate and a portion of said pin is adapted to prevent complete separation of the pin from the plate.

8.     A welding gauge as claimed in any preceding claim wherein means are provided for limiting the extent of the rectilinear movement of the rule relative to the plate whereby when the rule is moved to the limit of its movement and pivoted about said pivot the degree of angular displacement of  he rule relative to the plate bears a predetermined relationship to the distance between a datum point on the rule and a line defined on or by the plate.

9.     A gauge according to any preceding claim wherein said pivot comprises a pin engaged with a correspondingly screw-threaded bore in the plate and arranged to pass through an aperture in the rule.

FIG.1

FIG.2

0039582

2/3

FIG. 3

FIG. 4

FIG. 5

FIG. 6

## FIG. 7

FILLET WELD    PLATE THICKNESS
m                      mm

30 25 20 15 10 5 0 30 25 20 15 10 5 0

F↑                          P↑

4B        4D

D↓

0
5
10

WELD
REINFORCEMENT

10 5 0 5 10 15
DEPTH

45°

0° 5° 10° 20° 30°

WELD ANGLE

## FIG. 8

| | **DOCUMENTS CONSIDERED TO BE RELEVANT** | | CLASSIFICATION OF THE APPLICATION (Int. Cl.³) |
|---|---|---|---|
| Category | Citation of document with indication, where appropriate, of relevant passages | Relevant to claim | G 01 B 3/00 |
| A | AUTOMATIC WELDING, vol. 26, no. 1, January 1973, CAMBRIDGE (GB) "The Multi-Purpose Welding Gauge Mark 2" <br><br> * The whole article * | 1 | 3/56 |
| A | CH - A - 347 360 (N. CREVOISIER) <br><br> * Page 1, lines 23-66 * | 1-3,9 | |

TECHNICAL FIELDS SEARCHED (Int. Cl.³)

G 01 B   3/00
  3/56
  5/00
  5/24
B 23 K 37/00
  9/32

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13.08.1981 | CARETTE |

EPO Form 1503.1   06.78